# EUROPEAN PATENT APPLICATION

(11) **EP 4 703 268 A1**
(43) Date of publication of application: **04.03.2026**
(21) Application number: 25198285.6
(22) Date of filing: 26.08.2025
(51) Int. Cl.: B64D 27/34, B64D 35/021, B64D 35/08, B64D 27/33, B64D 35/023, B64D 35/025

(54) **CLUTCHED ELECTRIC POWERPLANT FOR AIRCRAFT PROPULSION SYSTEM**

(30) Priority: 26.08.2024 US 202463687053 P
(71) Applicant: PRATT & WHITNEY CANADA CORP., Longueuil, Québec J4G 1A1 (CA)
(72) Inventor: SHENOUDA, Antwan, (01BE5) Longueuil, J4G 1A1 (CA)
(74) Representative: Dehns

(57) **Abstract**

A propulsion system (20) is provided for an aircraft. This propulsion system (20) includes a propulsor rotor (22), a drivetrain (24), a first power unit (38A) and a second power unit (38B). The drivetrain (24) is coupled to the propulsor rotor (22). The first power unit (38A) includes a first overrunning clutch (44A) and a first electric motor (42A). The first overrunning clutch (44A) is configured to selectively couple the first electric motor (42A) to the drivetrain (24). The first electric motor (42A) is configured to drive rotation of the propulsor rotor (22) through the first overrunning clutch (44A) and the drivetrain (24). The second power unit (38B) includes a second overrunning clutch (44B) and a second electric motor (42B). The second overrunning clutch (44B) is configured to selectively couple the second electric motor (42B) to the drivetrain (24). The second electric motor (42B) is configured to drive the rotation of the propulsor rotor (22) through the second overrunning clutch (44B) and the drivetrain (24).

## Description

### TECHNICAL FIELD

This disclosure relates generally to an aircraft propulsion system and, more particularly, to an electric powerplant for the aircraft propulsion system.

### BACKGROUND INFORMATION

A propulsion system for an aircraft may include an electric powerplant for driving rotation of a propulsor rotor. Various types and configurations of electric powerplant systems are known in the art. While these known electric powerplant systems have various benefits, there is still room in the art for improvement.

### SUMMARY

According to an aspect of the present invention, a propulsion system is provided for an aircraft. This propulsion system includes a propulsor rotor, a drivetrain, a first power unit and a second power unit. The drivetrain is coupled to the propulsor rotor. The first power unit includes a first overrunning clutch and a first electric motor. The first overrunning clutch is configured to selectively couple the first electric motor to the drivetrain. The first electric motor is configured to drive rotation of the propulsor rotor through the first overrunning clutch and the drivetrain. The second power unit includes a second overrunning clutch and a second electric motor. The second overrunning clutch is configured to selectively couple the second electric motor to the drivetrain. The second electric motor is configured to drive the rotation of the propulsor rotor through the second overrunning clutch and the drivetrain.

According to another aspect of the present invention, another propulsion system is provided for an aircraft. This propulsion system includes a propulsor rotor, a drivetrain, a first power unit and a second power unit. The drivetrain is coupled to the propulsor rotor. The first power unit includes a first clutch and a first electric motor. The first clutch is configured to selectively couple the first electric motor to the drivetrain. The first electric motor is configured to drive rotation of the propulsor rotor through the first clutch and the drivetrain. The second power unit includes a second clutch and a second electric motor. The second clutch is configured to selectively couple the second electric motor to the drivetrain. The second electric motor is configured to drive rotation of the propulsor rotor through the second clutch and the drivetrain. The second power unit is coaxial with the first power unit.

According to still another aspect of the present invention, another propulsion system is provided for an aircraft. This propulsion system includes a propulsor rotor, a drivetrain, a first power unit, a second power unit and a housing structure. The drivetrain is coupled to the propulsor rotor. The first power unit includes a first clutch and a first electric motor. The first clutch is configured to selectively couple the first electric motor to the drivetrain. The first electric motor is configured to drive rotation of the propulsor rotor through the first clutch and the drivetrain. The second power unit includes a second clutch and a second electric motor. The second clutch is configured to selectively couple the second electric motor to the drivetrain. The second electric motor is configured to drive rotation of the propulsor rotor through the second clutch and the drivetrain. The first electric motor and the second electric motor are disposed in a common interior of the housing structure.

The following optional features may be applied to any of the above aspects.

The first overrunning clutch and the second overrunning clutch may each be configured as or otherwise include a sprag clutch.

The first overrunning clutch and the second overrunning clutch may each be configured as or otherwise include a passively actuated clutch.

The first overrunning clutch may be configured to couple the first electric motor to the drivetrain when the first electric motor is powered up. The first overrunning clutch may be configured to decouple the first electric motor from the drivetrain when the first electric motor is powered down. The second overrunning clutch may be configured to couple the second electric motor to the drivetrain when the second electric motor is powered up. The second overrunning clutch may be configured to decouple the second electric motor from the drivetrain when the second electric motor is powered down.

The first electric motor and the second electric motor may be configured to concurrently drive the rotation of the propulsor rotor.

The first electric motor may be configured to drive the rotation of the propulsor rotor while the second electric motor is depowered. The second electric motor may be configured to drive the rotation of the propulsor rotor while the first electric motor is depowered.

The first electric motor and the second electric motor may each be configured as or otherwise include a permanent magnet electric motor.

The first electric motor may include a first rotor rotatable about an axis. The second electric motor may include a second rotor rotatable about the axis.

The first electric motor may include a first rotor rotatable about a first axis. The second electric motor may include a second rotor rotatable about a second axis that is parallel with and laterally offset from the first axis.

The propulsion system may also include a housing structure housing the first electric motor and the second electric motor.

The first overrunning clutch and the second overrunning clutch may be housed within the housing structure.

The drivetrain may be configured as or otherwise include a shaft coaxial with the first electric motor and the second electric motor. The first overrunning clutch may be configured to selectively couple the first electric motor to the shaft. The second overrunning clutch may be configured to selectively couple the second electric motor to the shaft.

The shaft may project axially through a bore of the first electric motor.

The drivetrain may include a geartrain, a first shaft and a second shaft. The first shaft may couple the first overrunning clutch to the geartrain independent of the second shaft. The second shaft may couple the second overrunning clutch to the geartrain independent of the first shaft.

The propulsion system may include a thermal engine configured to drive the rotation of the propulsor rotor through the drivetrain.

The propulsion system may also include a third overrunning clutch configured to selectively couple the thermal engine to the drivetrain.

The propulsor rotor may be an open rotor.

The propulsor rotor may be a ducted rotor.

The present disclosure may include any one or more of the individual features disclosed above and/or below alone or in any combination thereof.

The foregoing features and the operation of the invention will become more apparent in light of the following description and the accompanying drawings.

### BRIEF DESCRIPTION OF THE DRAWINGS

FIG. 1 is a schematic illustration of an aircraft propulsion system with a serial arrangement of electric motors.
FIGS. 2A and 2B are schematic illustrations of a clutch in engaged and disengaged arrangements.
FIG. 3 is a schematic illustration of the aircraft propulsion system with a parallel arrangement of electric motors.
FIG. 4 is a schematic illustration of the aircraft propulsion system with a serial arrangement of electric motors and a thermal engine.
FIG. 5 is a schematic illustration of the aircraft propulsion system with a parallel arrangement of electric motors and a thermal engine.

### DETAILED DESCRIPTION

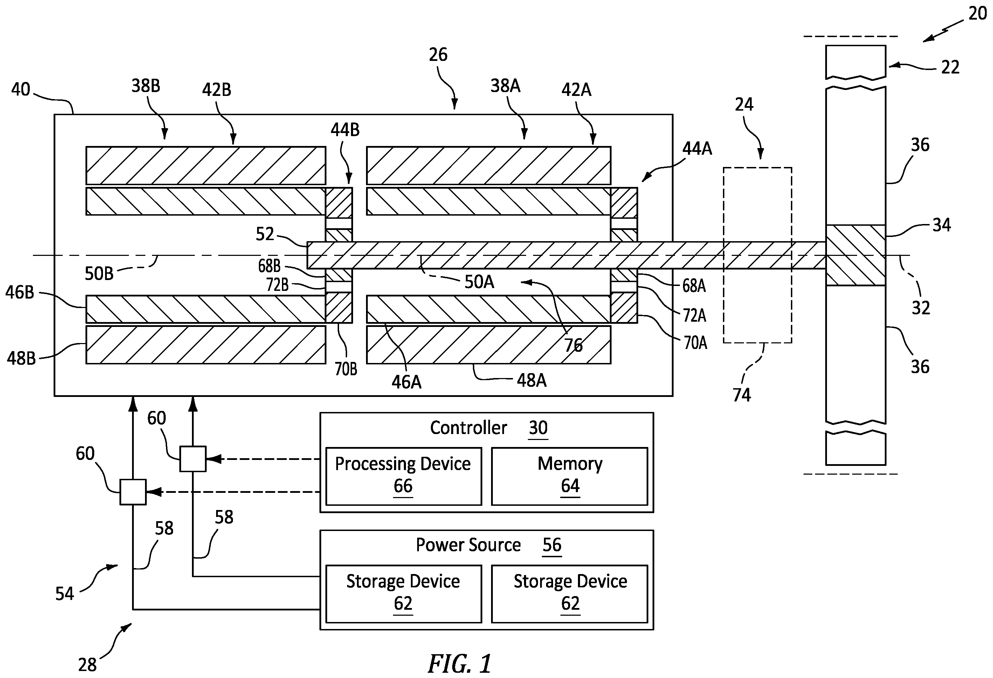

FIG. 1 illustrates a propulsion system 20 for an aircraft. The aircraft may be an airplane, a helicopter, a drone (e.g., an unmanned aerial vehicle (UAV)) or any other manned or unmanned aerial vehicle or system. The aircraft propulsion system 20 of FIG. 1 includes a bladed propulsor rotor 22, a drivetrain 24 and a clutched electric powerplant 26 configured to drive rotation of the propulsor rotor 22 through the drivetrain 24. The aircraft propulsion system 20 also includes an electrical power system 28 and a controller 30.

The propulsor rotor 22 is an air mover that is rotatable about a centerline axis 32 of the propulsor rotor 22. The propulsor rotor 22 includes a propulsor base 34 (e.g., a disk or a hub) and a plurality of propulsor blades 36. The propulsor blades 36 are arranged circumferentially about the propulsor base 34 and the propulsor axis 32 in an annular array; e.g., a circular array. The propulsor blades 36 are connected to (e.g., formed integral with or otherwise attached to) the propulsor base 34. Each of the propulsor blades 36 projects radially out from the propulsor base 34 to a radial outer tip of the respective propulsor blade 36. The propulsor rotor 22 may be configured as an open propulsor rotor (e.g., an un-ducted propulsor rotor), where at least the propulsor blades 36 are exposed to and are disposed in an environment external to the aircraft propulsion system 20 and, more generally, the aircraft. The propulsor rotor 22, for example, may be configured as a propeller rotor, a rotorcraft rotor (e.g., a main helicopter rotor), a propfan rotor or a pusher fan rotor. Alternatively, the propulsor rotor 22 may be configured as a ducted propulsor rotor, where at least the propulsor blades 36 are disposed within a duct of the aircraft propulsion system 20. The propulsor rotor 22, for example, maybe configured as a fan rotor. The present disclosure, however, is not limited to such exemplary propulsor rotor configurations.

The electric powerplant 26 of FIG. 1 includes a plurality of electric power units 38A and 38B (generally referred to as "38") and a common housing structure 40 (e.g., a casing) for the electric powerplant 26 and its electric power units 38. It is contemplated, however, that each of the electric power units 38 may alternatively be configured with its own dedicated housing structure in other embodiments. Referring again to FIG. 1, each of the electric power units 38A, 38B includes an electric motor 42A, 42B (generally referred to as "42") and a motor clutch 44A, 44B (generally referred to as "44").

Each electric motor 42A, 42B of FIG. 1 includes an electric motor rotor 46A, 46B (generally referred to as "46") and an electric motor stator 48A, 48B (generally referred to as "48"). The motor rotor 46A, 46B is rotatable about a centerline axis 50A, 50B (generally referred to as "50") of the respective electric motor 42A, 42B and its motor rotor 46A, 46B. The motor stator 48 of FIG. 1 is radially outboard of, axially overlaps and circumscribes the motor rotor 46. With this arrangement, the respective electric machine is configured as a radial flux electric motor. The electric motors 42 of the present disclosure, however, are not limited to such an exemplary rotor-stator configuration nor to radial flux arrangements. For example, the motor rotor 46 may alternatively be radially outboard of, axially overlap and circumscribe the motor stator 48. In another example, the motor rotor 46 may be axially next to the motor stator 48 configuring the respective electric motor 42 as an axial flux electric motor. Referring again to FIG. 1, the motor rotor 46 and the motor stator 48 of each electric motor 42 are housed within the housing structure 40. More particularly, the motor rotor 46 and the motor stator 48 of each electric motor 42 are housed within a common interior (e.g., interior volume, cavity, chamber, etc.) of the housing structure 40. With such an arrangement, the first electric motor 42A and the second electric motor 42B may share common lubrication system elements (e.g., passages, plenums, etc.) within the housing structure 40. However, as described above, it is contemplated each electric motor 42A, 42B may alternatively be housed within its own dedicated housing structure.

Each electric motor 42 may be configured as a permanent magnet motor. Each electric motor 42, for example, may include a plurality of permanent magnets arranged circumferentially around the respective motor axis 50 in an annular array; e.g., a circular array. In some embodiments, the permanent magnets are included as part of the motor rotor 46. In other embodiments, the permanent magnets are included as part of the motor stator 48.

Each motor clutch 44 is configured to selectively couple the respective electric motor 42 to the propulsor rotor 22 through the drivetrain 24. More particularly, each motor clutch 44 of FIG. 1 is configured to selectively couple the motor rotor 46 of the respective electric motor 42 to a respective element 52 of the drivetrain 24 such as, but not limited to, a common driveshaft. For example, when the first electric motor 42A is powered up (e.g., electrically energized, turned on, etc.), the first motor clutch 44A may operatively couple the first motor rotor 46A to the respective drivetrain element 52. However, when the first electric motor 42A is powered down (e.g., electrically de-energized, turned off, etc.), the first motor clutch 44A may operatively decouple the first motor rotor 46A from the respective drivetrain element 52. Similarly, when the second electric motor 42B is powered up, the second motor clutch 44B may operatively couple the second motor rotor 46B to the respective drivetrain element 52. However, when the second electric motor 42B is powered down, the second motor clutch 44B may operatively decouple the second motor rotor 46B from the respective drivetrain element 52.

The electrical power system 28 includes electrical circuitry 54 (e.g., a power bus) and an electrical power source 56. The electrical circuitry 54 electrically couples the power source 56 to the electric motors 42. This electrical circuitry 54 may include one or more electrical leads 58 (e.g., high voltage lines) and one or more electrical devices 60 for conditioning, metering, regulating and/or otherwise controlling electrical power transfer from the power source 56 to the electric motors 42. Examples of the electrical devices 60 include, but are not limited to, switches, current regulators, converters and buffers.

The power source 56 is configured to provide electricity to the electric motors 42 through the electrical circuitry 54. The power source 56 may also be configured to store the electricity. The power source 56, for example, may be configured as or otherwise include one or more electricity storage devices 62 such as, but not limited to, batteries, supercapacitors and/or the like. The power source 56 may also or alternatively generate the electricity provided to the electric motors 42. The power source 56, for example, may also or alternatively include one or more fuel cells. The present disclosure, however, is not limited to any particular power source type or configuration.

The controller 30 is in signal communication with (e.g., hardwired and/or wirelessly coupled to) the electrical circuitry 54 and one or more of its electrical devices 60. This controller 30 is configured to control operation of the electric motors 42 using the electrical circuitry 54 and its electrical devices 60. The controller 30, for example, may signal the electrical circuitry 54 to cutoff electricity to the first electric motor 42A and/or the second electric motor 42B to depower the respective electric motor(s) 42. In another example, the controller 30 may signal the electrical circuitry 54 to supply electricity to the first electric motor 42A and/or the second electric motor 42B to power up the respective electric motor(s) 42. The controller 30 may also signal the electrical circuitry 54 to regulate a rate of the electricity supplied to the respective electric motor(s) 42; e.g., to increase or decrease power output from the respective electric motor(s) 42.

The controller 30 may be configured as an onboard engine controller; e.g., an electronic engine controller (EEC), an electronic control unit (ECU), a full-authority digital engine controller (FADEC), etc. The controller 30 may be implemented with a combination of hardware and software. The hardware may include memory 64 and at least one processing device 66, which processing device 66 may include one or more single-core and/or multi-core processors. The hardware may also or alternatively include analog and/or digital circuitry other than that described above.

The memory 64 is configured to store software (e.g., program instructions) for execution by the processing device 66, which software execution may control and/or facilitate performance of one or more operations such as those described herein. The memory 64 may be a non-transitory computer readable medium. For example, the memory 64 may be configured as or include a volatile memory and/or a nonvolatile memory. Examples of a volatile memory may include a random access memory (RAM) such as a dynamic random access memory (DRAM), a static random access memory (SRAM), a synchronous dynamic random access memory (SDRAM), a video random access memory (VRAM), etc. Examples of a nonvolatile memory may include a read only memory (ROM), an electrically erasable programmable read-only memory (EEPROM), a computer hard drive, etc.

For ease of description, the aircraft propulsion system 20 is described above with a single controller controlling operation of both the first electric motor 42A and the second electric motor 42B. In other embodiments, however, operation of each of the electric motors 42 may be controlled by a separate controller.

During operation of the aircraft propulsion system 20 of FIG. 1, the controller 30 may signal the electrical circuitry 54 to power up both the first electric motor 42A and the second electric motor 42B. More particularly, the electrical circuitry 54 directs electricity from the power source 56 to the first electric motor 42A and the second electric motor 42B. Each of the electric motors 42 converts the electricity received form the power source 56 into mechanical power. For example, within each electric motor 42, the motor stator 48 may generate an electromagnetic field with the motor rotor 46 using the electricity. The electromagnetic field may drive rotation of the motor rotor 46. The motor rotor 46 may thereby drive rotation of the propulsor rotor 22 about the propulsor axis 32 through the drivetrain 24. More particularly, the motor rotor 46 may drive rotation of the respective drivetrain element 52 through the respective motor clutch 44, where the rotation of the respective drivetrain element 52 (e.g., directly or indirectly) drives the rotation of the propulsor rotor 22.

During one or more dual motor modes of propulsion system operation, both the first electric motor 42A and the second electric motor 42B may be powered up to drive the rotation of the propulsor rotor 22. During one or more single motor modes of propulsion system operation, one of the electric motors 42 may be depowered while the other one of the electric motors 42 is powered up. For example, the first electric motor 42A may be powered up to drive the rotation of the propulsor rotor 22, and the second electric motor 42B may be depowered. In another example, the second electric motor 42B may be powered up to drive the rotation of the propulsor rotor 22, and the first electric motor 42A may be depowered. Such single motor operating modes may be utilized when there is a reduced power demand by the aircraft propulsion system 20; e.g., at low aircraft speed, during aircraft descent, etc. Such single motor operating modes may also or alternatively be utilized in an unlikely event of a fault in one of the electric motors 42; here, the depowered electric motor 42.

During the single motor operating modes, if the depowered electric motor 42 remained operatively coupled to the drivetrain 24 through its respective motor clutch 44, then the remaining powered electric motor 42 may drive rotation of both (a) the propulsor rotor 22 through the drivetrain 24 as well as (b) rotation of the motor rotor 46 in the depowered electric motor 42 through the drivetrain 24. This increases rotational friction and drag within the aircraft propulsion system 20. In addition, driving the motor rotor 46 in the depowered electric motor 42 may generate a reverse electromagnetic (EM) field within the depowered electric motor 42. This reverse electromagnetic field may in turn generate electricity (e.g., the electric motor 42 may be operated as an electric generator), which may be particularly problematic in the unlikely event of a fault in that depowered electric motor 42 or in circuitry dedicated to that depowered electric motor 42. Each motor clutch 44 of the present disclosure therefore is configured to operably decouple a respective electric motor 42 from the drivetrain 24 when that electric motor 42 is depowered.

To facilitate automatic decoupling of the depowered electric motor 42 from the drivetrain 24, each motor clutch 44 may be configured as or otherwise include a passively actuated clutch. More particularly, each motor clutch 44 may be configured as or otherwise include a one-way and/or overrunning clutch such as, but not limited to, a sprag clutch. Each motor clutch 44A, 44B of FIG. 1, for example, includes an inner clutch member 68A, 68B (generally referred to as "68"), an outer clutch member 70A, 70B (generally referred to as "70") and one or more sprags 72A, 72B (generally referred to as "72").

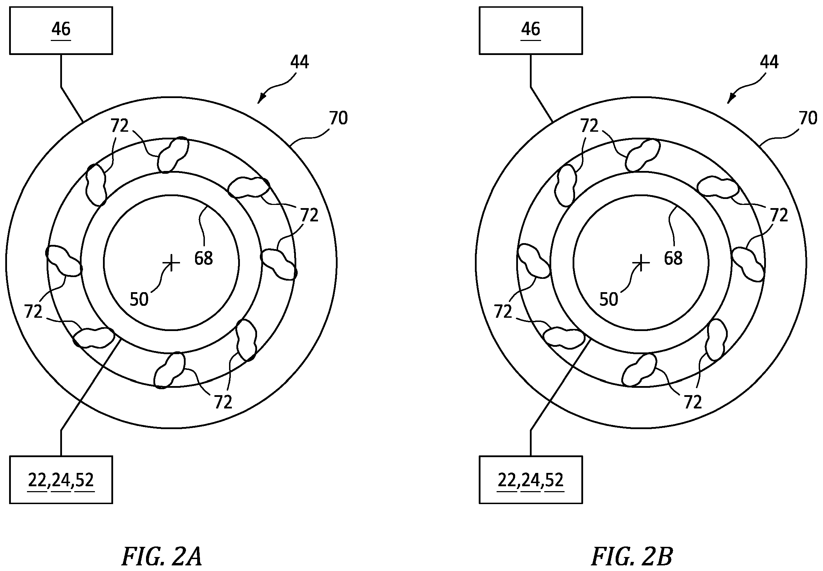

Referring to FIGS. 2A and 2B, the inner clutch member 68 may be coupled to and rotatably fixed with the respective drivetrain element 52 and, thus, the propulsor rotor 22 through the drivetrain 24. The drivetrain element 52 may thereby be coupled to the respective motor clutch 44 through its inner clutch member 68. Here, the inner clutch member 68 is rotatable about the respective motor axis 50.

The outer clutch member 70 may be coupled to and rotatably fixed with the respective motor rotor 46. The motor rotor 46 may thereby be coupled to the respective motor clutch 44 through its outer clutch member 70. The outer clutch member 70 is disposed radially outboard of and radially spaced from the inner clutch member 68. The outer clutch member 70 is axially aligned with extends circumferentially about (e.g., circumscribes) the inner clutch member 68. Here, the outer clutch member 70 is rotatable about the respective motor axis 50.

The sprags 72 are arranged circumferentially about the inner clutch member 68 in an array. This array of the sprags 72 is arranged within an annular gap formed by and radially between the inner clutch member 68 and the outer clutch member 70. Each of these sprags 72 is movable (e.g., pivotable) between an engaged position (e.g., see FIG. 2A) and a disengaged position (e.g., see FIG. 2B). Each sprag 72 may also be biased (e.g., spring biased) to move towards its engaged position of FIG. 2A.

In the engaged position of FIG. 2A, each sprag 72 engages (e.g., contacts) a cylindrical outer surface of the inner clutch member 68 and a cylindrical inner surface of the outer clutch member 70. When the respective electric motor 42 is operational / powered up, the motor rotor 46 may rotationally drive the outer clutch member 70 to a common (the same) or a faster rotational speed than the inner clutch member 68. The engagement between the inner surface of the outer clutch member 70 and each sprag 72 may cause that sprag 72 to move (e.g., pivot counterclockwise in FIG. 2A) into and remain in the engaged position of FIG. 2A, where the sprags 72 are jammed between the inner clutch member 68 and the outer clutch member 70. These jammed sprags 72 rotationally couple / lock the inner clutch member 68 to the outer clutch member 70.

In the disengaged position of FIG. 2B, each sprag 72 may still engage (e.g., contact) the outer surface of the inner clutch member 68 and the inner surface of the outer clutch member 70; e.g., due to the spring bias. However, when the respective electric motor 42 is non-operational / depowered, the rotational velocity of the outer clutch member 70 is slower than the inner clutch member 68; e.g., the outer clutch member 70 may be stationary. The engagement between the outer surface of the inner clutch member 68 and each sprag 72 may cause that sprag to move (e.g., pivot clockwise in FIG. 2B) into and remain in the disengaged position of FIG. 2B, where the sprags 72 slide along (e.g., skip along) the outer surface of the inner clutch member 68 and the inner surface of the outer clutch member 70. The inner clutch member 68 is thereby rotationally disengaged from the outer clutch member 70.

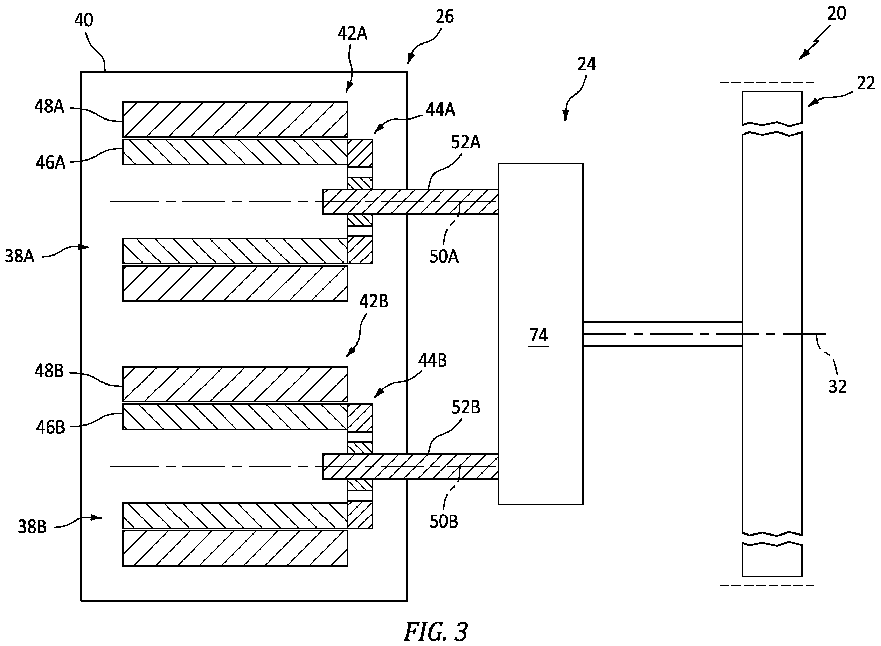

In some embodiments, referring to FIG. 1, the drivetrain 24 may be configured as a direct drive drivetrain. The drivetrain element 52, for example, may be configured as a common driveshaft which (e.g., directly) operatively couples each electric power unit 38A, 38B and its electric motor 42A, 42B to the propulsor rotor 22. With such an arrangement, the propulsor rotor 22 may rotate at a common (the same) rotational speed as the motor rotor(s) 46. In other embodiments, the drivetrain 24 may be configured as a geared drivetrain. The drivetrain 24, for example, may also include a geartrain 74 (e.g., a transmission, a speed change device, an epicyclic geartrain, etc.) coupled between the respective drivetrain element 52 and the propulsor rotor 22. With this arrangement, the propulsor rotor 22 may rotate at a different (e.g., slower) rotational speed than the motor rotor(s) 46. Other examples of the geared drivetrain as shown in FIGS. 3-5.

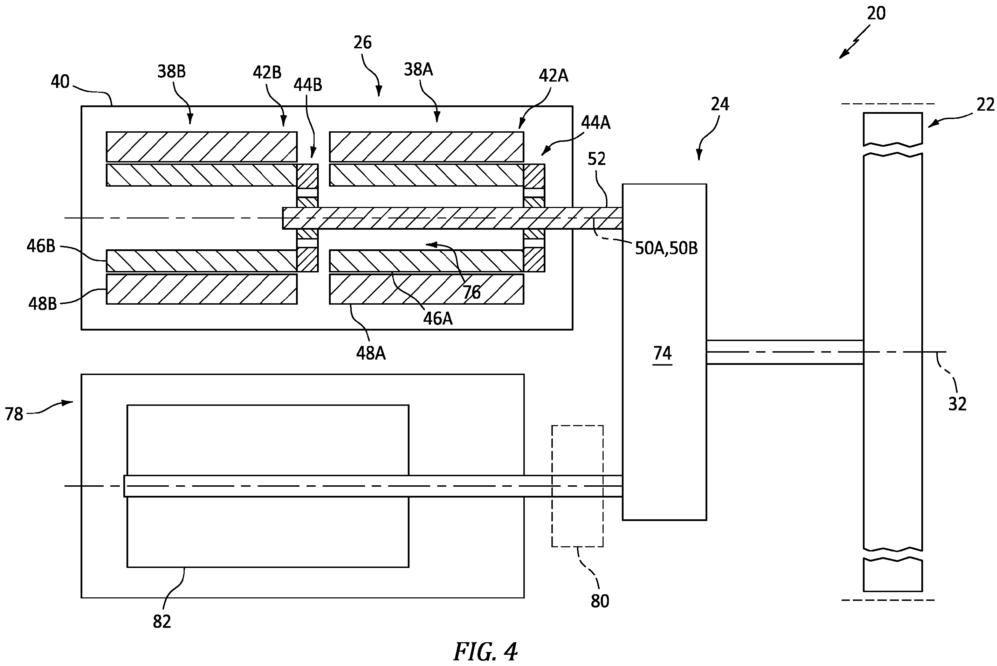

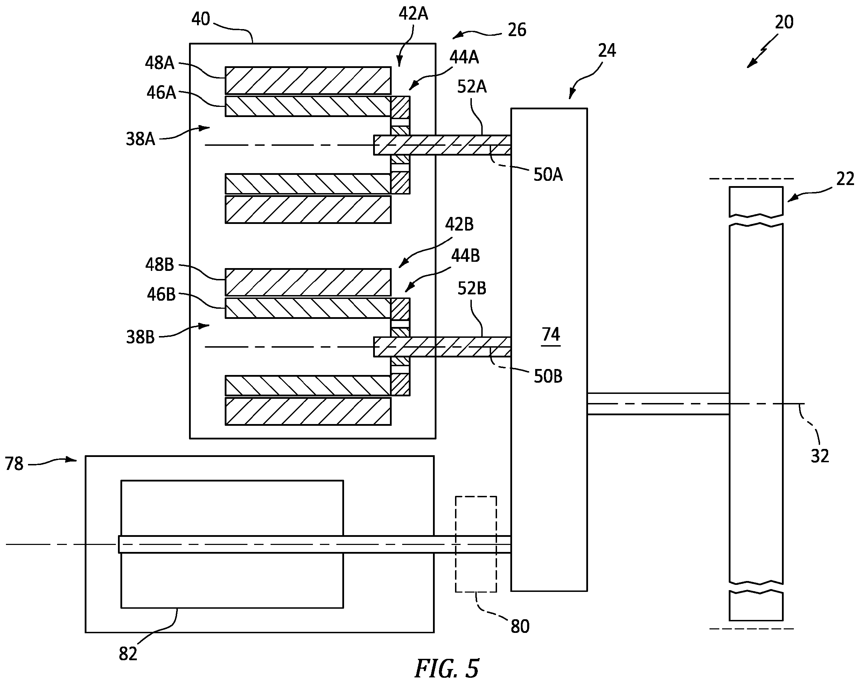

In some embodiments, referring to FIGS. 1 and 4, the first electric power unit 38A and its first electric motor 42A may be arranged coaxial with the second electric power unit 38B and its second electric motor 42B. Thus, the first motor axis 50A and the second motor axis 50B of FIGS. 1 and 4 are coaxial. With the arrangements of FIGS. 1 and 4, the drivetrain element 52 (e.g., the common driveshaft) projects axially through a bore 76 of the first electric motor 42A for coupling with the second motor clutch 44B. Here, the first electric power unit 38A and its members 42A and 44A are located axially between the propulsor rotor 22 and the second electric power unit 38B and its members 42B and 44B along the axes 50A, 50B. In other embodiments, referring to FIGS. 3 and 5, the first electric power unit 38A and its first electric motor 42A may be arranged non-coaxial with the second electric power unit 38B and its second electric motor 42B. The first motor axis 50A of FIGS. 3 and 5, for example, may (or may not) be parallel with, but laterally offset from the second motor axis 50B. The first electric power unit 38A may thereby be disposed laterally next to (e.g., and spaced laterally from) the second electric power unit 38B. By contrast to the arrangements of FIGS. 1 and 4, the electric motors 42 of FIGS. 3 and 5 are each operatively coupled to a distinct, dedicated drivetrain element 52A, 52B (generally referred to as "52").

In some embodiments, referring to FIGS. 1 and 3, the aircraft propulsion system 20 may be configured as an electric propulsion system. The aircraft propulsion system 20 FIGS. 1 and 3, for example, is configured without a thermal engine. In other embodiments, referring to FIGS. 4 and 5, the aircraft propulsion system 20 may be configured as a hybrid propulsion system. The aircraft propulsion system 20 of FIGS 4 and 5, for example, is configured with a thermal engine 78 operatively coupled to and configured to drive rotation of the propulsor rotor 22 through the drivetrain 24. Examples of the thermal engine 78 include, but are not limited to, a gas turbine engine, a rotary engine (e.g., a Wankel engine), a reciprocating piston engine, or any other type of continuous or intermittent internal combustion (IC) engine. In some embodiments, the aircraft propulsion system 20 may also include an engine clutch 80 for selectively operable coupling an internal rotating assembly 82 of the thermal engine 78 to the drivetrain 24. As described above, this engine clutch 80 may be configured as or otherwise include a one-way and/or overrunning clutch such as, but not limited to, a sprag clutch. However, in other embodiments, the engine clutch 80 may be an actively actuated clutch.

While various embodiments of the present disclosure have been described, it will be apparent to those of ordinary skill in the art that many more embodiments and implementations are possible within the scope of the disclosure. For example, the present disclosure as described herein includes several aspects and embodiments that include particular features. Although these features may be described individually, it is within the scope of the present disclosure that some or all of these features may be combined with any one of the aspects and remain within the scope of the disclosure. Accordingly, the present disclosure is not to be restricted except in light of the attached claims and their equivalents.

## Claims

1. A propulsion system (20) for an aircraft, comprising:
a propulsor rotor (22);
a drivetrain (24) coupled to the propulsor rotor (22);
a first power unit (38A) including a first overrunning clutch (44A) and a first electric motor (42A), the first overrunning clutch (44A) configured to selectively couple the first electric motor (42A) to the drivetrain (24), and the first electric motor (42A) configured to drive rotation of the propulsor rotor (22) through the first overrunning clutch (44A) and the drivetrain (24); and
a second power unit (38B) including a second overrunning clutch (44B) and a second electric motor (42B), the second overrunning clutch (44B) configured to selectively couple the second electric motor (42B) to the drivetrain (24), and the second electric motor (42B) configured to drive the rotation of the propulsor rotor (22) through the second overrunning clutch (44B) and the drivetrain (24).

2. The propulsion system (20) of claim 1, wherein:
the first overrunning clutch (44A) and the second overrunning clutch (44B) each comprise a sprag clutch; and/or
the first overrunning clutch (44A) and the second overrunning clutch (44B) each comprise a passively actuated clutch.

3. The propulsion system (20) of claim 1 or 2, wherein:
the first overrunning clutch (44A) is configured to couple the first electric motor (42A) to the drivetrain (24) when the first electric motor (42A) is powered up, and the first overrunning clutch (44A) is configured to decouple the first electric motor (42A) from the drivetrain (24) when the first electric motor (42A) is powered down; and
the second overrunning clutch (44B) is configured to couple the second electric motor (42B) to the drivetrain (24) when the second electric motor (42B) is powered up, and the second overrunning clutch (44B) is configured to decouple the second electric motor (42B) from the drivetrain (24) when the second electric motor (42B) is powered down.

4. The propulsion system (20) of claim 1, 2 or 3, wherein the first electric motor (42A) and the second electric motor (42B) are configured to concurrently drive the rotation of the propulsor rotor (22).

5. The propulsion system (20) of any preceding claim, wherein:
the first electric motor (42A) is configured to drive the rotation of the propulsor rotor (22) while the second electric motor (42B) is depowered; and
the second electric motor (42B) is configured to drive the rotation of the propulsor rotor (22) while the first electric motor (42A) is depowered.

6. The propulsion system (20) of any preceding claim, wherein the first electric motor (42A) and the second electric motor (42B) each comprise a permanent magnet electric motor.

7. The propulsion system (20) of any preceding claim, wherein:
the first electric motor (42A) comprises a first rotor (46A) rotatable about an axis (50A); and
the second electric motor (42B) comprises a second rotor (46B) rotatable about the axis (50B).

8. The propulsion system (20) of any preceding claim, wherein:
the drivetrain (24) comprises a shaft (52) coaxial with the first electric motor (42A) and the second electric motor (42B);
the first overrunning clutch (44A) is configured to selectively couple the first electric motor (42A) to the shaft (52); and
the second overrunning clutch (44B) is configured to selectively couple the second electric motor (42B) to the shaft (52),
wherein, optionally, the shaft (52) projects axially through a bore (76) of the first electric motor (42A).

9. The propulsion system (20) of any of claims 1 to 6, wherein:
the first electric motor (42A) comprises a first rotor (46A) rotatable about a first axis (50A); and
the second electric motor (42B) comprises a second rotor (46B) rotatable about a second axis (50B) that is parallel with and laterally offset from the first axis (50A).

10. The propulsion system (20) of any of claims 1 to 6 or 9, wherein:
the drivetrain (24) comprises a geartrain (74), a first shaft (52A) and a second shaft (52B);
the first shaft (52A) couples the first overrunning clutch (44A) to the geartrain (74) independent of the second shaft (52B); and
the second shaft (52B) couples the second overrunning clutch (44B) to the geartrain (74) independent of the first shaft (52B).

11. The propulsion system (20) of any preceding claim, further comprising a housing structure (40) housing the first electric motor (42A) and the second electric motor (42B),
wherein, optionally, the first overrunning clutch (44A) and the second overrunning clutch (44B) are housed within the housing structure (40).

12. The propulsion system (20) of any preceding claim, further comprising a thermal engine (78) configured to drive the rotation of the propulsor rotor (22) through the drivetrain (24),
wherein, optionally, the propulsion system (20) further comprises a third overrunning clutch (80) configured to selectively couple the thermal engine (78) to the drivetrain (24).

13. The propulsion system (20) of any preceding claim, wherein:
the propulsor rotor (22) is an open rotor; or
the propulsor rotor (22) is a ducted rotor.

14. A propulsion system (20) for an aircraft, comprising:
a propulsor rotor (22);
a drivetrain (24) coupled to the propulsor rotor (22);
a first power unit (38A) including a first clutch (44A) and a first electric motor (42A), the first clutch (44A) configured to selectively couple the first electric motor (42A) to the drivetrain (24), and the first electric motor (42A) configured to drive rotation of the propulsor rotor (22) through the first clutch (44A) and the drivetrain (24); and
a second power unit (38B) including a second clutch (44B) and a second electric motor (42B), the second clutch (44B) configured to selectively couple the second electric motor (42B) to the drivetrain (24), and the second electric motor (42B) configured to drive rotation of the propulsor rotor (22) through the second clutch (44B) and the drivetrain (24), wherein the second power unit (38B) is coaxial with the first power unit (38A).

15. A propulsion system (20) for an aircraft, comprising:
a propulsor rotor (22);
a drivetrain (24) coupled to the propulsor rotor (22);
a first power unit (38A) including a first clutch (44A) and a first electric motor (42A), the first clutch (44A) configured to selectively couple the first electric motor (42A) to the drivetrain (24), and the first electric motor (42A) configured to drive rotation of the propulsor rotor (22) through the first clutch (44A) and the drivetrain (24);
a second power unit (38B) including a second clutch (44B) and a second electric motor (42B), the second clutch (44B) configured to selectively couple the second electric motor (42B) to the drivetrain (24), and the second electric motor (42B) configured to drive rotation of the propulsor rotor (22) through the second clutch (44B) and the drivetrain (24); and
a housing structure (40), the first electric motor (42A) and the second electric motor (42B) disposed in a common interior of the housing structure (40).
